# EUROPÄISCHE PATENTSCHRIFT

(11) **EP 1 662 017 B1**
(45) Veröffentlichungstag und Bekanntmachung des Hinweises auf die Patenterteilung: **06.06.2007**
(21) Anmeldenummer: 04027616.4
(22) Anmeldetag: 20.11.2004
(51) Int. Cl.: C23C 14/26

(54) **Vorrichtung zum Verdampfen von Materialien**
Apparatus for evaporation of materials
Dispositif pour l'évaporation de materiaux

(43) Veröffentlichungstag der Anmeldung: 31.05.2006
(73) Patentinhaber: Applied Materials GmbH & Co. KG, 63755 Alzenau (DE)
(72) Erfinder: Hein, Stefan, D-63825 Blankenbach (DE); Klemm, Günter, D-63667 Nidda (DE); Skuk, Peter, D-61130 Nidderau (DE)
(74) Vertreter: Schickedanz, Willi

(56) Entgegenhaltungen:
- EP-A- 0 581 496
- EP-A- 1 424 404
- DE-C1- 4 439 519
- DE-U1- 29 819 126
- US-A- 5 157 240
- US-A- 5 596 673
- US-A1- 2004 042 770
- PATENT ABSTRACTS OF JAPAN Bd. 1995, Nr. 04, 31. Mai 1995 (1995-05-31) & JP 07 018442 A (MATSUSHITA ELECTRIC IND CO LTD), 20. Januar 1995 (1995-01-20)

## Beschreibung

Die Erfindung betrifft eine Vorrichtung nach dem Oberbegriff des Patentanspruchs 1.

Verdampfer werden in der Vakuumbeschichtungstechnik benötigt, um Materialien - beispielsweise Metalle - zu verdampfen und Substrate mit einer Materialschicht zu versehen. Bei den Substraten kann es sich um Folien, Bänder und dergleichen handeln (vgl. DE 195 27 604 A1, DE 43 10 085 A1, DE 42 23 568 C1, DE 42 03 632 C2, DE 102 24 908 A1). Die Verdampfer besitzen in der Regel einen Verdampfertiegel, der den zu verdampfenden Werkstoff aufnimmt. Oberhalb des Verdampfertiegels kann eine Düsenleiste vorgesehen sein, die aus einem der Länge nach aufgeschlitzten Metallprofil besteht. Die von dem Schlitz gebildete Düsenöffnung soll dafür sorgen, dass das aus dem Verdampfertiegel austretende verdampfte Material sich gleichmäßig auf das unmittelbar vor der Düsenöffnung befindliche Substrat niederschlägt. Die Heizelemente sind hierbei Heizspiralen (DE 38 17 513 C2). Als Heizelement zum Aufheizen des Materials in einem Verdampferschiffchen oder Tiegel kann auch eine mit Schlitzen versehene Grafitfolie verwendet werden, die um den Tiegel ein Mäanderband bildet (WO 00/46418).

Bei einer anderen Bedampfungsvorrichtung für Vakuum-Verdampfungsanlagen ist ein elektrischer Heizstab als Heizelement vorgesehen (DE 198 43 818 A1).

Weiterhin ist eine Hochvakuum-Beschichtungsanlage bekannt, bei welcher Material mittels Hochstrom verdampft wird und zur Erzeugung des Hochstroms wenigstens ein Transformator mit einem Eisenkern, einer Primärwicklung und einer Sekundärwicklung vorgesehen ist, dessen Sekundärwicklung am zu verdampfenden Material oder einem aufzuheizenden Tiegel liegt (DE 42 09 334 C2, US 2 664 853).

Ferner ist eine Anordnung zur Regelung der Verdampferrate von Tiegeln bekannt, die durch Stromdurchfluss erhitzt werden und aus denen Metall verdampft wird (DE 44 04 550 C2). Bei dieser Anordnung wird der aus dem elektrischen Widerstand eines Tiegels und dem elektrischen Widerstand des in dem Tiegel befindlichen zu verdampfenden Metalls bestehende Gesamtwiderstand auf einen bestimmten Wert geregelt.

Des Weiteren ist ein heizbarer Tiegel zur Aufnahme eines Verdampfergutes bekannt, der mit Heizelementen zur Aufheizung des Tiegelbehälters versehen ist (DE 298 19 126 U 1). Zusätzlich besitzt dieser Tiegel auch Heizelemente im Öffnungsbereich.

Ein Tiegel mit einem mit mehreren Öffnungen versehenen beheizbaren Öffnungsbereich ist ebenfalls beschrieben (US 5 157 240).

Schließlich ist eine Bedampfungsvorrichtung bestehend aus einem Schmelztiegel und einem darauf aufsetzbaren Düsenrohr bekannt (EP 1 424 404 A2). Schmelztiegel und Düsenrohr verfügen bei dieser Vorrichtung über jeweils unabhängige Heizungen.

Die meisten bekannten Verdampfer besitzen nur einen Heizkreis, was zu einer schlechten Regelbarkeit der Verdampferleistung führt. Außerdem wird die Düsenleiste als Verbrauchsteil während des Betriebs verformt, was eine Vorverformung bei jedem Wechsel der Düsenleiste bedingt.

Der Erfindung liegt die Aufgabe zugrunde, die Regelbarkeit der Verdampferleistung zu erhöhen.

Diese Aufgabe wird gemäß den Merkmalen des Anspruchs 1 gelöst.

Die Erfindung betrifft somit eine Vorrichtung zum Verdampfen von Materialien mit einem Verdampfertiegel, in dem sich zu verdampfendes Material befindet. Um den Verdampfertiegel ist ein Verdampferrohr gelegt, das - in Längsrichtung des Verdampferrohrs betrachtet - wenigstens zwei räumlich hintereinander angeordnete und elektrisch getrennt ansteuerbare Heizkreise aufweist, wobei bevorzugt jeder dieser Heizkreise aus wenigstens zwei Teilheizkreisen besteht, von denen einer auf einer Seite des Verdampferrohrs und einer auf der anderen Seite des Verdampferrohrs angeordnet ist. Das Verdampferrohr ist mit einem Oberteil versehen, das einen eigenen Heizkreis besitzt.

Der mit der Erfindung erzielte Vorteil besteht insbesondere darin, dass die Düsenleiste wesentlich störunanfälliger ist und das Auswechseln der Düsenleiste vereinfacht wird. Außerdem wird das Verdampferrohr in seiner Längsrichtung gleichmäßiger beheizt. Weiterhin ist die Verdampferleistung gut regelbar und die stromführenden Heizspiralen bilden keine unerwünschten Plasmen.

Ein Ausführungsbeispiel der Erfindung ist in den Zeichnungen dargestellt und wird im Folgenden näher beschrieben. Es zeigen:
Fig. 1 einen Teil einer Bandbeschichtungsanlage für die Aufnahme eines Verdampfers;
Fig. 2 eine perspektivische Ansicht eines teilweise geöffneten Verdampfers;
Fig. 3 eine Darstellung von drei Teil-Heizkreisen auf einer Seite eines Verdampfers;
Fig. 4 einen Querschnitt durch den Verdampfer gemäß Fig. 3.

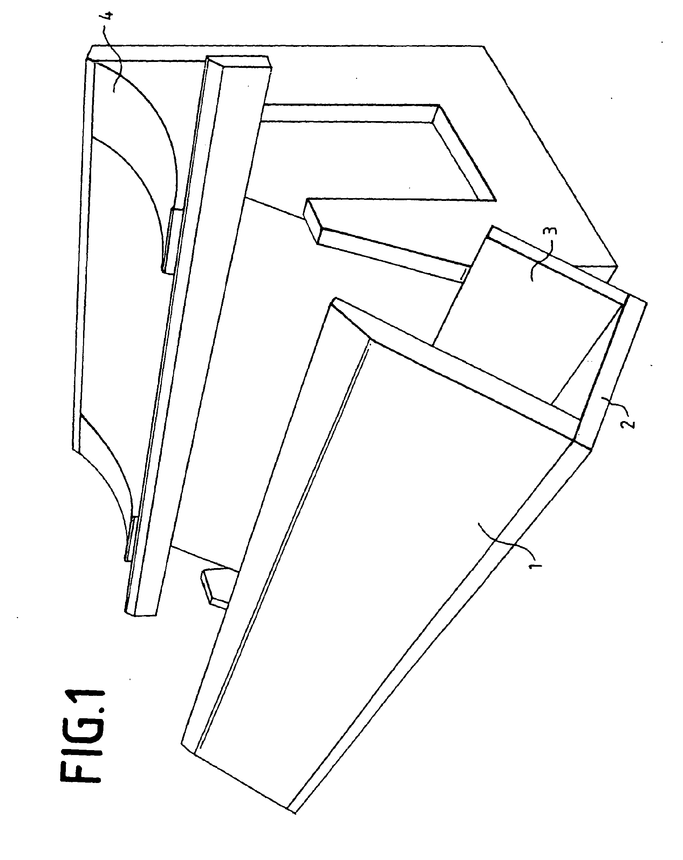

In der Fig. 1 ist ein Teil einer Bandbeschichtungsanlage dargestellt. Dieser Teil weist eine Aufnahme für einen Verdampfer auf, die durch drei Wände 1, 2, 3 gebildet wird. Die Wände 1 und 3 verlaufen hierbei parallel, während die Wand 2 einen Boden bildet. Oberhalb der Aufnahme mit den drei Wänden 1, 2, 3 befindet sich ein Teil 4, über dem im Betrieb der Anlage eine Walze verläuft, die ein Band bzw. eine Folie führt. Die Oberfläche des Teils 4 ist deshalb in Anpassung an die nicht dargestellte Walze gewölbt ausgebildet.

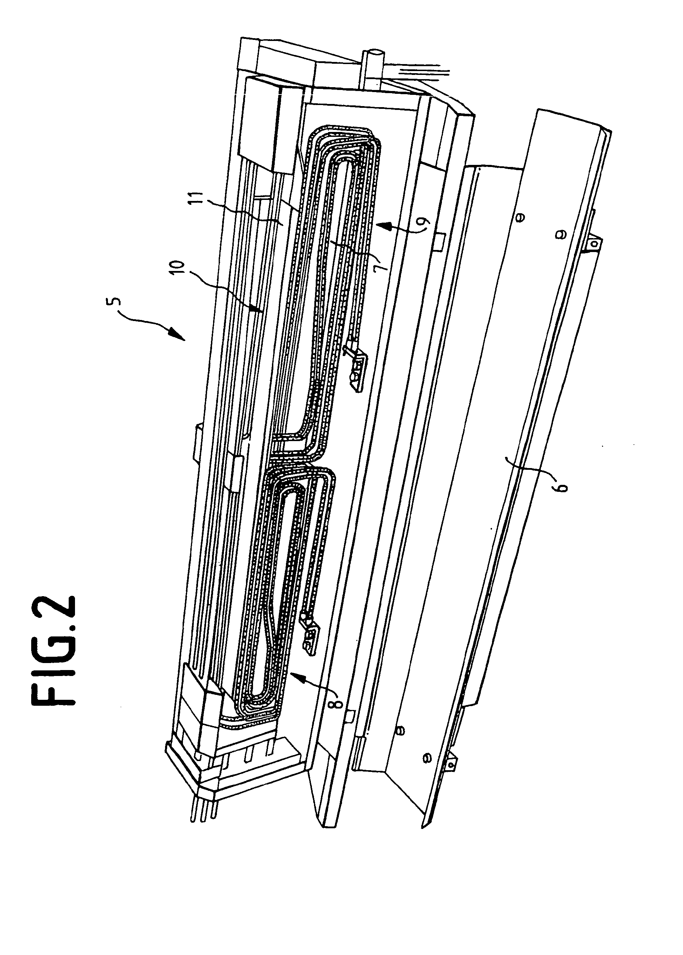

Zwischen die Wände 1, 3 und auf dem Boden ruhend wird ein Verdampfer 5 eingeführt, der in der Fig. 2 näher dargestellt ist.

Bei diesem in der Fig. 2 dargestellten Verdampfer 5 ist eine Seitenverkleidung 6 weggeklappt, sodass eine Seite des Verdampferrohrs 7 freiliegt. Man erkennt hierbei, dass die freiliegende Seite des Verdampferrohrs 7 zwei Teilheizkreise 8, 9 aufweist. Diesen Teilheizkreisen entsprechen auf der gegenüber liegenden Seite des Verdampferrohrs 7 zwei weitere Teilheizkreise, die in der Fig. 2 nicht zu sehen sind. Der Teilheizkreis 8 bildet mit dem nicht sichtbaren Teilheizkreis auf der gegenüber liegenden Seite des Verdampferrohrs 7 einen ersten Heizkreis, während der Teilheizkreis 9 mit dem gegenüber liegenden verdeckten Teilheizkreis einen zweiten Heizkreis bildet. Die Teilheizkreise eines Heizkreises sind elektrisch parallel geschaltet. Ein Teilheizkreis kann wiederum aus einem oder mehreren Heizleitersträngen bestehen. Die in der Fig. 2 dargestellten Teilheizkreise 8, 9 weisen jeweils zwei Heizleiterstränge auf.

Ein dritter Heizkreis 10 befindet sich am Oberteil 11 des Verdampferrohrs 7.

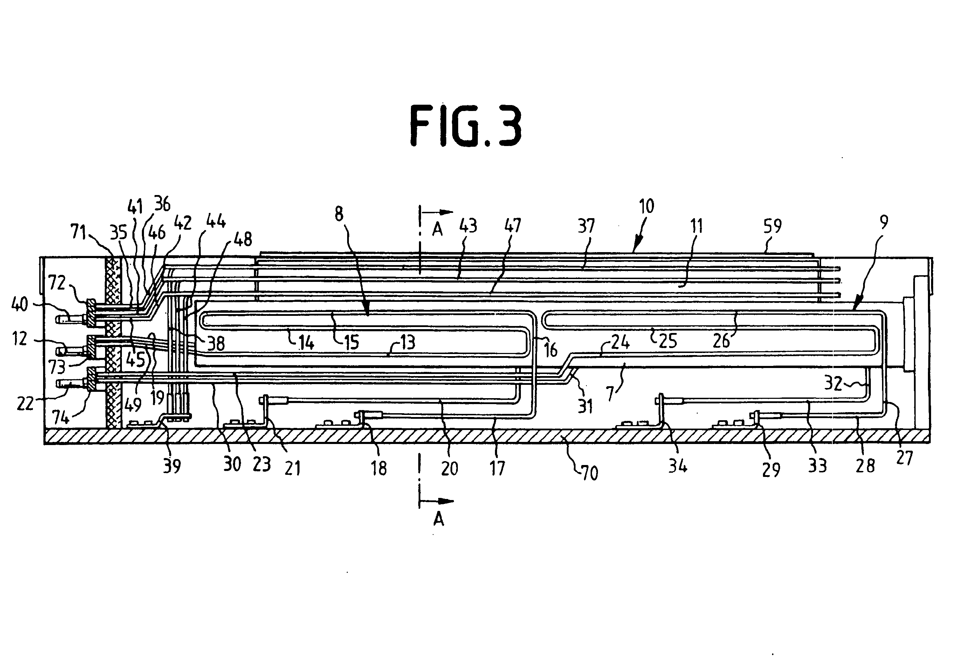

Nähere Einzelheiten der Anordnung der Heizleiter ergeben sich aus der vereinfachten Darstellung der Fig. 3.

Aus dieser Fig. 3 erkennt man den vorderen Teilheizkreis 8 und den hinteren Teilheizkreis 9. Beide Teilheizkreise 8, 9 weisen im Gegensatz zu Fig. 2 der besseren Übersichtlichkeit halber nur jeweils einen Heizleiterstrang auf. Ein Heizleiter 49 beginnt an einem Steckkontakt 12 und führt über die Heizleiterabschnitte 13 bis 17 zu einem Masseanschluss 18.

Der im Wesentlichen nicht sichtbare und auf der gegenüber liegenden Seite angeordnete Heizleiter 19 beginnt ebenfalls am Steckkontakt 12 und verschwindet dann hinter dem Verdampferrohr 7. Als Heizleiterabschnitt 20 erscheint dieser Heizleiter dann wieder und endet am Masseanschluss 21. Damit ist der erste Heizkreis geschlossen.

Der zweite Heizkreis besteht aus dem hinteren Teilheizkreis 9 und dem im Wesentlichen nicht sichtbaren Teilheizkreis auf der anderen Seite des Verdampferrohrs 7. Der Teilheizkreis 9 beginnt an einem Steckkontakt 22 und führt über Heizleiterabschnitte 23 bis 28 auf einen Masseanschluss 29. Der im Wesentlichen nicht sichtbare Teilheizkreis beginnt ebenfalls am Steckkontakt 22 und führt über Heizleiterabschnitte 30, 31 hinter das Verdampferrohr 7, um dann als Heizleiterabschnitte 32, 33 wieder zu erscheinen und auf einen Masseanschluss 34 zu führen.

Der dritte Heizkreis 10 befindet sich am Oberteil 11 des Verdampferrohrs 7. Er weist einen ersten Heizleiter mit den Heizleiterabschnitten 35 bis 37 auf, der mit einem Steckkontakt 40 verbunden ist, wobei parallel zu dem Heizleiterabschnitt 37 und hinter dem Oberteil 11 ein rücklaufender Heizleiterabschnitt vorgesehen ist, der über den Heizleiterabschnitt 38 mit einem Masseanschluss 39 verbunden ist.

An dem gleichen Steckkontakt 40 liegt ein zweiter Heizleiter mit den Heizleiterabschnitten 41 bis 43 und mit einem hinter dem Oberteil 11 nicht sichtbaren rücklaufenden Heizleiterabschnitt, der über den Heizleiterabschnitt 44 mit dem Masseanschluss 39 verbunden ist.

Ein dritter zum Heizkreis 10 gehörender Heizleiter ist ebenfalls mit dem Steckkontakt 40 verbunden und führt über seine Heizleiterabschnitte 45 bis 48 zum Masseanschluss 39. Hierbei ist der Heizleiterabschnitt 48 Teil eines hinter dem Oberteil 11 verlaufenden Heizleiterabschnitts. Mit 72, 73, 74 sind Anschlussleisten bezeichnet, während mit 70 eine Grundplatte und mit 71 Isolationsplatten bezeichnet sind.

Alle drei den Heizkreis 10 bildenden Heizleiter sind elektrisch parallel geschaltet.

Die in der Fig. 2 gezeigten Teilheizkreise haben, wie bereits erwähnt, doppelt so viele Heizleiter wie die Teilheizkreise gemäß Fig. 3.

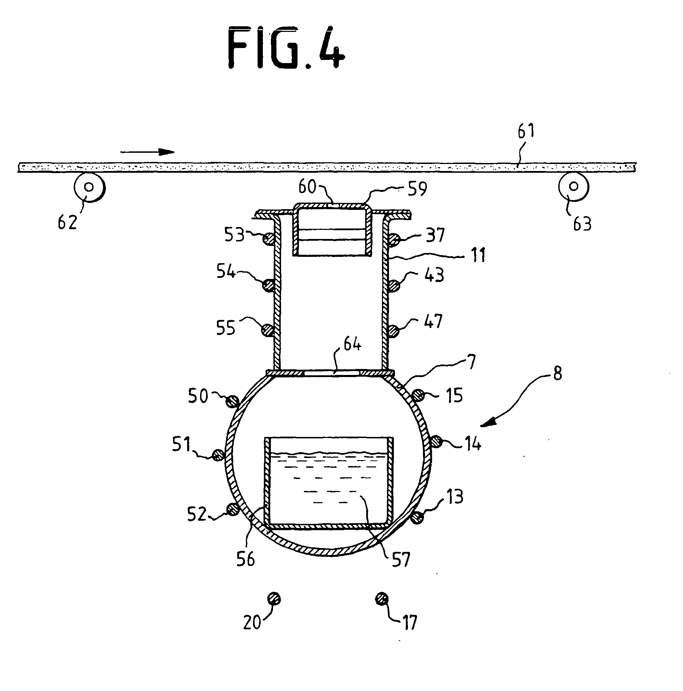

In der Fig. 4 ist ein vergrößerter Schnitt A-A durch das Verdampferrohr 7 und das Oberteil 11 gemäß Fig. 3 dargestellt. Man erkennt hierbei die Heizleiterabschnitte 15, 14, 13 und 17, 50 bis 52 und 20 des ersten Heizkreises.

Die Heizleiterabschnitte 37, 43, 47, 53 bis 55 bilden den dritten Heizkreis. Zwischen den Heizleiterabschnitten 53 und 37 befindet sich eine Düsenleiste 59 mit einer Düse 60. Durch diese Düse 60 gelangt das verdampfte Material auf ein zu beschichtendes Band 61, das über Rollen 62, 63 geführt ist.

Der zweite Heizkreis ist in der Fig. 4 nicht zu erkennen.

In dem Verdampferrohr 7 ist ein Tiegel 56 angeordnet, in dem sich zu verdampfendes Material 57 befindet.

Im oberen Bereich des Verdampferrohrs 7 ist ein Längsschlitz 64 vorgesehen.

Das Verdampferrohr 7 und das Oberteil 11 können mit laminierten Isolationsblechen umgeben sein, um eine Wärmedämmung herbeizuführen.

Die Beschichtung des Bands 61 erfolgt in der Weise, dass das Material 57 im Tiegel 56, der im Verdampferrohr 7 angeordnet ist, so erhitzt wird, dass es verdampft und über den Schlitz 64 und die Düse 60 auf das Band 61 gelangt.

Die Erfindung sieht also drei oder mehr regelbare Heizkreise vor. Ein Heizkreis sorgt dabei für die gewünschte Temperatur der Düsenleiste, die von der Temperatur des Verdampferrohrs unabhängig ist. Mindestens zwei weitere regelbare Heizkreise sind für die Längsverteilung der Temperatur im Verdampferrohr vorgesehen.

Bei den verwendeten Heizleitern handelt es sich um so genannte Mantelheizleiter, die aus einem elektrisch gut leitenden Kern, einer diesen umgebenden Isolationsschicht und einer die Isolationsschicht umgebenden Metallummantelung bestehen. Die einzelnen Heizkreise bestehen aus mehreren Heizleitern.

## Patentansprüche

1. Vorrichtung zum Verdampfen von Materialien, mit einem Verdampfertiegel (56), in dem sich zu verdampfendes Material (57) befindet, und mit einem den Verdampfertiegel (56) umgebenden Verdampferrohr (7), **dadurch gekennzeichnet, dass** dieses Verdampferrohr (7) in seiner Längsrichtung wenigstens zwei räumlich hintereinander angeordnete und elektrisch getrennt ansteuerbare Heizkreise aufweist.

2. Vorrichtung nach Anspruch 1, **dadurch gekennzeichnet, dass** jeder Heizkreis aus wenigstens zwei - bezogen auf das Verdampferrohr (7) - einander gegenüber liegenden Teilheizkreisen (8; 9) besteht.

3. Vorrichtung nach Anspruch 1, **dadurch gekennzeichnet, dass** das Verdampferrohr (7) mit einem Oberteil (11) versehen ist, das einen eigenen Heizkreis (10) aufweist.

4. Vorrichtung nach Anspruch 1, **dadurch gekennzeichnet, dass** das Verdampferrohr (7) oberhalb des Pegels des zu verdampfenden Materials (57) eine Öffnung (64) besitzt.

5. Vorrichtung nach Anspruch 3, **dadurch gekennzeichnet, dass** im oberen Bereich des Oberteils (11) eine Düsenleiste (59) mit einem Schlitz (60) vorgesehen ist.

6. Vorrichtung nach Anspruch 2, **dadurch gekennzeichnet, dass** die Teilheizkreise (8, 9) Heizleiter (13 bis 16; 24 bis 28) aufweisen, die mäanderförmig auf der Außenseite des Verdampferrohrs (7) angeordnet sind.

7. Vorrichtung nach Anspruch 3, **dadurch gekennzeichnet, dass** der Heizkreis (10) des Oberteils (11) mehrere Heizleiter (37, 43, 47) aufweist, die auf einer Seite des Oberteils (11) verlaufen, dann auf die andere Seite des Oberteils (11) umbiegen und als Heizleiter (53 bis 55) auf dieser anderen Seite des Oberteils (11) zurücklaufen.

8. Vorrichtung nach Anspruch 5, **dadurch gekennzeichnet, dass** die Düsenleiste (59) zwischen dem Band (61) und der Öffnung (64) des Verdampferrohrs (7) angeordnet ist.

## Claims

1. Arrangement for vaporizing materials, with a vaporizer crucible (56) in which is disposed a material (57) to be vaporized, and with a vaporizer tube (7), encompassing the vaporizer crucible (56), **characterized in that** the vaporizer tube (7) in its longitudinal direction is comprised of at least two heating circuits, one spatially disposed after the other, and electrically controllable separately.

2. Arrangement as claimed in claim 1, **characterized in that** each heating circuit is comprised of at least two heating subcircuits (8; 9) opposite to one another with respect to the vaporizer tube (7).

3. Arrangement as claimed in claim 1, **characterized in that** the vaporizer tube (7) is provided with a top portion (11) which comprises its own heating circuit (10).

4. Arrangement as claimed in claim 1, **characterized in that** the vaporizer tube (7) has an opening (64) above the level of the material (57) to be vaporized.

5. Arrangement as claimed in claim 3, **characterized in that** in the upper region of the top portion (11) a nozzle bar (59) with a slot (60) is provided.

6. Arrangement as claimed in claim 2, **characterized in that** the heating subcircuits (8, 9) comprise heating conductors (13 to 16; 24 to 28), which are disposed in the form of a meander on the outside of the vaporizer tube (7).

7. Arrangement as claimed in claim 3, **characterized in that** the heating circuit (10) of the top portion (11) comprises several heating conductors (37, 43, 47) extending on one side of the top portion (11), subsequently bend around on the other side of the top portion (11) and return as heating conductors (53 to 55) on this other side of the top portion (11).

8. Arrangement as claimed in claim 5, **characterized in that** the nozzle bar (59) is disposed between the web (61) and the opening (64) of the vaporizer tube (7).

## Revendications

1. Dispositif pour la vaporisation de matériaux, avec un creuset de vaporisation (56) contenant un matériau (57) à vaporiser, et avec un tube de vaporisation (7) entourant le creuset de vaporisation (56), **caractérisé en ce que** ce tube de vaporisation (7) est muni, dans sa direction longitudinale, d'au moins deux circuits de chauffage disposés sans l'espace l'un derrière l'autre et pouvant être commandés électriquement de manière séparée.

2. Dispositif selon la revendication 1, **caractérisé en ce que** chaque circuit de chauffage est composé d'au moins deux circuits de chauffage partiels (8; 9) disposés l'un en face de l'autre par rapport au tube de vaporisation (7).

3. Dispositif selon la revendication 1, **caractérisé en ce que** le tube de vaporisation (7) est muni d'une partie supérieure (11) qui possède son propre circuit de chauffage (10).

4. Dispositif selon la revendication 1, **caractérisé en ce que** le tube de vaporisation (7) possède une ouverture (64) au-dessus du niveau du matériau à vaporiser (57).

5. Dispositif selon la revendication 3, **caractérisé en ce qu'**une barre à buse (59) pourvue d'une fente (60) est prévue dans la zone supérieure de la partie supérieure (11).

6. Dispositif selon la revendication 2, **caractérisé en ce que** les circuits de chauffage partiels (8, 9) sont pourvus de conducteurs chauffants (13 à 16; 24 à 28) disposés en serpentin sur le côté extérieur du tube de vaporisation (7).

7. Dispositif selon la revendication 3, **caractérisé en ce que** le circuit de chauffage (10) de la partie supérieure (11) est pourvu de plusieurs conducteurs chauffants (37, 43, 47) courant sur un côté de la partie supérieure (11), passant ensuite sur l'autre côté de la partie supérieure (11) et retournant en arrière sur cet autre côté de la partie supérieure (11) sous la forme de conducteurs chauffants (53 à 55).

8. Dispositif selon la revendication 5, **caractérisé en ce que** la barre à buse (59) est disposée entre la bande (61) et l'ouverture (64) du tube de vaporisation (7).
